# EUROPEAN PATENT SPECIFICATION

(11) **EP 4 089 059 B1**
(45) Date of publication and mention of the grant of the patent: **19.08.2026**
(21) Application number: 21173876.0
(22) Date of filing: 14.05.2021
(51) Int. Cl.: C03C 17/00, C03C 17/30

(54) **SI-BASED SOL-GEL HYDROPHOBIC TRANSPARENT COATING**
SI-BASIERTE HYDROPHOBE TRANSPARENTE SOL-GEL-BESCHICHTUNG
REVÊTEMENT TRANSPARENT HYDROPHOBE SOL-GEL À BASE DE SI

(43) Date of publication of application: 16.11.2022
(73) Proprietor: Rina Consulting - Centro Sviluppo Materiali S.p.A., 00129 Roma (IT)
(72) Inventor: BERGO, Andrea, 00129 ROME (IT); MEDURI, Angelo, 00129 Rome (IT); TULUI, Mario, 00129 Rome (IT); RATTO, Vittorio, 00129 Rome (IT); BEZZON, Alessia, 00129 Rome (IT); DONATO, Demetrio Massimiliano, 00129 Rome (IT)
(74) Representative: Pace Napoleone, Maria

(56) References cited:
- WO-A1-2018/130701
- KR-A- 20150 059 879
- US-A1- 2014 154 466
- CIERNIKOVÁ MARIANNA ET AL: "Relation between chemical composition of sols and surface free energy of inorganic-organic films", JOURNAL OF SOL-GEL SCIENCE AND TECHNOLOGY, SPRINGER, NEW YORK, NY, US, vol. 88, no. 3, 27 October 2018 (2018-10-27), pages 497 - 507, XP036641319, ISSN: 0928-0707, [retrieved on 20181027], DOI: 10.1007/S10971-018-4856-Y

## Description

### Field of the Invention

The present invention relates to a new hydrophobic transparent coating, and in particular to a rapidly RT-curable coating which imparts hydrophobic characteristics to a glass surface while preserving its transparency. These characteristics help countering the soiling problem experienced by glass surfaces. The main foreseen application is for photovoltaic (PV) panels, but such coating can also be applied - but not limited - to the following: building, automotive, marine glasses.

### Background of the Invention

In recent years the number of large photovoltaic installations around the world has increased, notably in areas close to the equator, where the greater irradiation allows greater energy efficiency and competitive costs. To maximize PV modules exposure in these regions lower tilting angles are required, greatly exposing them to soiling, that is the deposition on the panels of dirt such as dust, sand, animal manure. The phenomenon depends on several factors, each with different weight, but it is geography that mostly affects it, by determining (a) the soiling nature (humidity, temperature, wind speed, particulate size, fauna, proximity to salt water or factories, ...); (b) the mitigating factors, that are the environmental elements that can help in cleaning the panels (wind, rainfall, ...); (c) the panel tilting angle, which plays a role both in the exposure to soiling and to the mitigating factors. (Ferretti, September 2018) (Julius Tanesab, 2015).

Over time, the phenomenon of soiling leads to a decrease in electrical efficiency, affecting the operation of the PV modules and increasing the costs associated with their maintenance (Kurz, 2017).

In an environment particularly exposed to dust, a PV module can accumulate 80 to 300 mg/m² of particulate matter per day, and every 100 mg / m2 of accumulation causes an incremental loss of 0.4-0.7% (Bing Guo, 2018). Even in optimized cleaning scenarios, its effects reduce the current global solar power production by at least 3-4%, which translates into at least 3-5 billion EUR annual revenue losses. This reduction could reach 4-7% and more than 4-7 billion EUR losses in 2023 (Klemens Ilse, 2019).

On the single PV field, the annual losses in electricity produced commonly range between 1.5 and 6.2%, but vary greatly depending on the location of the PV modules (Mohammad Reza Maghami, 2016). This results in a significant geographic variation in power reduction: from 6-13% for PV modules located in Cyprus, to 4.4% - 20% for PV modules located in southern Spain or Israel (Ferretti, September 2018), to a power reduction 50% output for PV modules exposed in the eastern part of Saudi Arabia (Syed A. M. Said, 2014) (José Zorrilla-Casanova, 2011).

The presence of a light rain slightly improves the efficiency of some PV modules but significantly worsens others (Mohammad Reza Maghami, 2016). This is because phenomena of humidity or light rain in arid environments can lead to cementation of dirt (Ferretti, September 2018). In particular, in 2001 Kimber et al. studied the effect of rain on 250 PV module sites in California (USA): their conclusion was that at least 20 mm of rain is required to clean the PV modules to avoid soiling-related energy losses (Mohammad Reza Maghami, 2016).

Similar issues are found for any glass surface for which the reduction of the transmitted light, caused by accumulated dirt, is important, e.g. in the case of building windows.

Currently, most PV fields make use of one or more of the following cleaning technologies to overcome the problem of soiling:
- Rain and wind. Free resources but not always available. Their contribution may be insufficient or even ambiguous, as they sometimes help fouling. Kimber et al. in 2006 they noticed that after a light rain there was a rapid decline in performance in various cases (Mohammad Reza Maghami, 2016).
- Manual or automatized washing, with the use of brushes adequately designed to avoid scratching the modules and with the possibility of dispensing water. Labour costs, cost of automated systems (they would cost around 450,000 euros for a 10 MW plant (Ferretti, September 2018), work safety, cleaning efficiency are quite problematic factors.

To overcome maintenance costs, patents introduced transparent hydrophobic coatings, which can be used to impart anti-soiling characteristics. These characteristics limit or avoid attachment of dirt on the surface or help its cleaning (Kobrin, 2018).

Some of such patents describe super-hydrophobic coatings, a feature that while improving e.g., anti-soiling, is detrimental to durability due to the intrinsic fragile nature of their hierarchical structures. Usually, these patents do not report durability data under real or simulated operative conditions.

To tackle the durability problem, hybrid organic-inorganic coatings based on silicon oxide were reported in the literature.

Sina Maghsoodi, Aravamuthan Varadarajan and Meisam Movassat (Enki Technology, Inc.) have patented a durable anti-reflective coating that improves optical properties (Patent No. US9382449B2, 2014) having transparency to light, low reflectivity, good mechanical properties, anti-soiling, self-cleaning, weather resistance and durability sufficient to withstand prolonged exposure outdoors. The synthesis involves a two-stage process in acid catalysis, an alcoholic solvent, two hydrolysable silane precursors among the tetraalkoxy and organotryalkoxy ones, an additive (such as nanofillers, surfactants, adhesion promoters, etc.).

Jianfeng Li (Dalian Jiaotong University) has patented a synthesis method for a silicon-based sol-gel coating for anti-reflective glass surfaces. The composition of the formulation is as follows: TEOS, ethanol, ethylene glycol, isopropanol and deionized water in a volumetric ratio of 101: 34: 70: 33: 14.5 (Patent No. CN102795788A, 2012). The following documents disclose coatings having a composition similar to the compositions of the present application: KR20150059879-A, US2014154466-A1, WO2018130701-A1 and CIERNIKOVÁ MARIANNA ET AL: "Relation between chemical composition of sols and surface free energy of inorganic-organic films",JOURNAL OF SOL-GEL SCIENCE AND TECHNOLOGY, SPRINGER, NEW YORK, NY, US, vol. 88, no. 3, 27 October 2018 (2018-10-27), pages 497-507, XP036641319,ISSN: 0928-0707, DOI: 10.1007/S10971-018-4856-Y.

Most of such patents includes curing treatments at temperatures above room temperature (e.g., 100 °C) or other conditions (e.g., inert atmosphere) which hinder the direct applicability on glass surfaces already installed e.g., on site on PV field.

A new solution that can overcome the soiling problem, which can be implemented on site, decreasing cleaning and maintenance costs, as well as improving production and profits, is therefore highly desired and yet to be seen.

### Brief Description of the Drawings

**Figure 1** is a flow chart comprising the major steps of the new coating preparation.
**Figure 2** is a transmittance characterisation of uncoated and two typical coatings: one obtained with Example 3 and one obtained with Example 4.
**Figure 3** is an image of visual results of the soiling test on: (from left to right) two uncoated glass samples; one sample coated with Example 1; one sample coated with Example 2; one sample coated with Example 3.

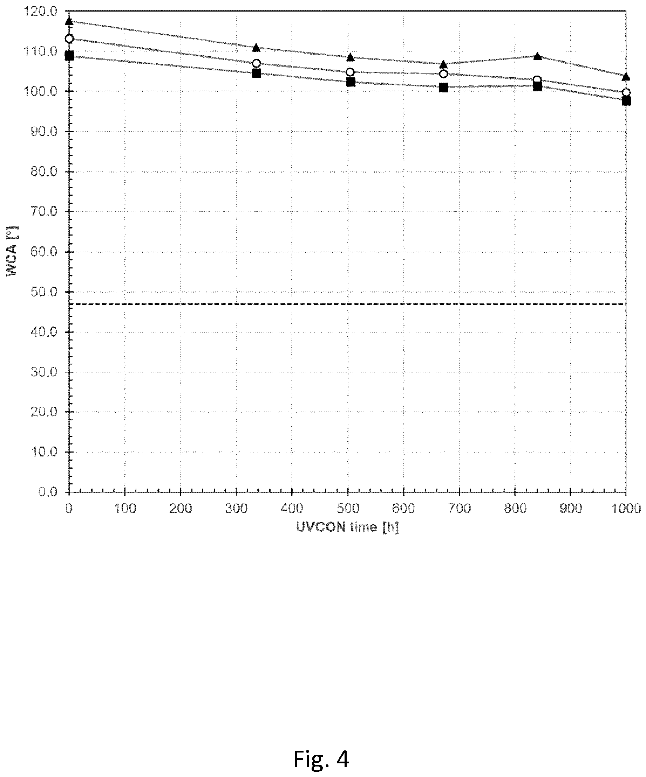

**Figure 4****:** is a plot of the evolution of WCA with UVCON time on selected examples of manufactured coatings, showing they can withstand 1,000 hours of exposure. Legend: ▲ curve obtained with Example 1; ■ curve obtained with Example 2; o curve obtained with Example 3; dashed line based on pristine glass.

### Summary of the Invention

The present invention provides a new hydrophobic and transparent coating composition according to the main and the following claims.

The present invention refers to a silicon based hydrophobic and transparent coating on a photovoltaic panel, building glasses, automotive glasses obtained from a composition having the formulation consisting essentially of:
- a silicon-based hydrolysable main precursor, selected from tetraalkoxysilanes, being in weight percentage from 0.10 to 65 (and in molar percentage from 0.01 to 35);
- one or more silicon-based hydrolysable secondary precursors, selected from silazanes or organo-trialkoxysilanes having at least eight Carbon-atoms in the non-hydrolysable organic group, being in weight percentage from 0.01 to 5.00 (and in molar percentage from 0.01 to 1.98),
- a hydrolysis reagent, preferably deionized water, being in weight percentage from 0.10 to 15.00 (and in molar percentage from 0.01 to 50),
- an acid catalyst, leading to a solution with a pH lower or equal to 5, being in weight percentage from 0.01 to 5.00 (and in molar percentage from 0.05 to 5),
- an organic solvent, preferably ethanol or isopropanol, balance;
wherein said composition of chemicals is stirred at room temperature for between 2h and 72 h and said coating is cured at room temperature for about 120 seconds.

The hydrophobic coating of the present invention is preferably obtained from a composition where the silicon-based hydrolysable main precursor, selected from tetraalkoxysilanes, is tetraethylorthosilicate (TEOS). Still preferably the one or more silicon-based hydrolysable secondary precursors are: 1H, 1H, 2H, 2H-perfluorooctyltriethoxysilane (PFO); octyl-triethoxysilane (OTES); hexamethyldisilazane (HMDS). The acid catalyst is preferably: nitric acid (HNO₃) or hydrochloric acid (HCl).

The new coating and the relevant liquid solution in which the acid-catalyzed sol-gel synthesis takes place comprises five components as above described; the composition of the liquid solution can be expressed in molar percentages or alternatively in weight percentages, and for clarity the percentages are expressed both in molar and in weight form.

The hydrophobic coating of the present invention is even more preferably obtained from a composition where the silicon-based hydrolysable main precursor is in weight percentage from 2.00 to 55.00 (and in molar percentage between 0.80 and 20.0), the one or more silicon based hydrolysable secondary precursors are in weight percentage from 0.20 to 3.50 (and in molar percentage between 0.05 and 0.75), the hydrolysis reagent is in weight percentage from 1.50 to 12.00 (and in molar percentage between 1.00 and 35.00), the acid catalyst is in weight percentage from 0.40 to 4.00 (and in molar percentage between 0.80 and 4.00).

| | % mol | | % weight | |
|---|---|---|---|---|
| | min | max | min | max |
| Silicon based main precursor | 0.01 | 35.00 | 0.10 | 65 |
| *silicon based main precursor (preferred range)* | 0.8 | 20.00 | 2.00 | 55 |
| silicon based secondary precursor(s) | 0.01 | 1.98 | 0.01 | 5 |
| *silicon based secondary precursor(s) (preferred range)* | 0.05 | 0.75 | 0.20 | 3.5 |
| hydrolysis reagent | 0.01 | 50.00 | 0.10 | 15 |
| *hydrolysis reagent (preferred range)* | 1 | 35.00 | 1.50 | 12 |
| catalyst | 0.05 | 5.00 | 0.01 | 5 |
| *catalyst (preferred range)* | 0.8 | 4.00 | 0.40 | 4 |

As used herein, tetraalkoxysilanes are silanes of general structure (OR)₄Si wherein R is at each occurrence a linear or branched alkyl group. Organo-trialkoxysilanes are silanes of general structure (OR)₃Si-R' wherein R at each occurrence is a linear or branched alkyl group and R' is a linear or branched alkyl group having at least eight carbon atoms and optionally substituted with one or more halogens, preferably with one or more fluorine atoms. Silazanes are any hydrides of silicon and nitrogen having a straight or branched chain of silicon and nitrogen atoms joined by covalent bonds.

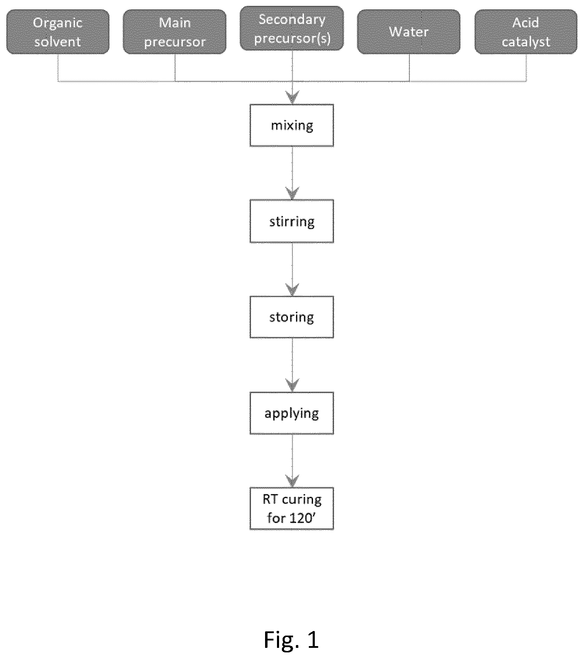

The present invention refers to a new coating realized in five steps (Figure 1):
(1) formulation: mixing the ingredients to obtain a liquid solution;
(2) stirring: letting the liquid solution stir for a period of time;
(3) storing: optional period of time between stirring ends and application begins;
(4) application: applying the liquid formulation on the desired substrate;
(5) curing: to obtain solid coating from the liquid solution.

In the formulation step, the coating formulation is achieved by sol-gel synthesis at room temperature via a single-step, acid-catalysed synthesis process.

To obtain the new coating in the mixing stage, the solution was mixed preferably between 2 h and 72 h.

In the storing stage (optional), the solution can be stored before being applied, this period can be over a year, preferably within 3 months.

In the application stage, coating application can be obtained by processes as bar coating, dip coating, wipe coating, and Slot-Die coating, always at room temperature.

After deposition, curing of the coating is achieved at room temperature (about 25 °C) in 120 seconds or less.

Therefore the present invention further refers to a method for obtaining a silicon-based hydrophobic and transparent coating comprising:
a) obtaining a solution with the composition of chemicals as defined above;
b) stirring the solution from step a) for a period comprised from about 2 h and 72 h, preferably from about 2 h and 48 h;
c) applying at room temperature the liquid formulation from step b) on a substrate;
d) curing to obtain a solid gel coating by leaving the substrate coated with the liquid solution from step c) at room temperature for about 120 seconds.

In the method as defined above the substrate is preferably a glass, steel or ceramic substrate, more preferably a photovoltaic panel, building glasses, automotive or marine glasses.

The invention further refers to a substrate coated with the hydrophobic and transparent coating of the invention.

The new coating, as proposed in the present invention, was characterised according to:
- UNI EN ISO 16474-3:2014 and UNI EN ISO 16474-1:2014 standard employing an UVCON instrument and the following repetitive cycles in presence of humidity: (1) 4 h at 40 °C; (2) 4 h at 60 °C and UV-A 340 nm irradiation.
- anti-soiling properties with positive outcome via laboratory procedures by accelerated weathering test and by visual test and found to be transparent.

### Example 1

The hydrophobic and transparent coating was produced with the following formulation:
- TEOS as main precursor, being in molar percentage 2.38 (8.57 wt%)
- isopropanol as organic solvent, being in molar percentage 78.19 (81.05 wt%)
- PFO secondary precursor, being in molar percentage 0.30 (2.64 wt%)
- distilled water as hydrolysis reagent, being in molar percentage 16.81 (5.22 wt%)
- HNO₃ as catalyst, being in molar percentage 2.32 (2.52 wt%)

For the production process the chemicals are added sequentially and stirred at room temperature for 48 h. The solution is then deposited on glass substrate(s) by wipe coating. Finally, the coating(s) is ready in 120 s or less at room temperature.

### Example 2

The hydrophobic and transparent coating was produced with the following formulation:
- TEOS as main precursor, being in molar percentage 1.34 (4.73 wt%)
- isopropanol as organic solvent, being in molar percentage 87.76 (89.54 wt%)
- PFO secondary precursor, being in molar percentage 0.17 (1.46 wt%)
- distilled water as hydrolysis reagent, being in molar percentage 9.43 (2.88 wt%)
- HNO₃ as catalyst, being in molar percentage 1.30 (1.39 wt%)

For the production process the chemicals are added sequentially and stirred at room temperature for 24 h. The solution is then deposited on glass substrate(s) by wipe coating. Finally, the coating(s) is ready in 120 s or less at room temperature.

### Example 3

The hydrophobic and transparent coating was produced with the following formulation:
- TEOS as main precursor, being in molar percentage 0.93 (3.27 wt%)
- isopropanol as organic solvent, being in molar percentage 91.49 (92.77 wt%)
- PFO secondary precursor, being in molar percentage 0.12 (1.01 wt%)
- distilled water as hydrolysis reagent, being in molar percentage 6.56 (1.99 wt%)
- HNO₃ as catalyst, being in molar percentage 0.90 (0.96 wt%)

For the production process the chemicals are added sequentially and stirred at room temperature for 2 h. The solution is then deposited on glass substrate(s) by wipe coating. Finally, the coating(s) is ready in 120 s or less at room temperature.

### Example 4

The hydrophobic and transparent coating was produced with the following formulation:
- TEOS as main precursor, being in molar percentage 0.93 (3.28 wt%)
- isopropanol as organic solvent, being in molar percentage 91.49 (93.19 wt%)
- OTES secondary precursor, being in molar percentage 0.12 (0.57 wt%)
- distilled water as hydrolysis reagent, being in molar percentage 6.56 (2.00 wt%)
- HNO₃ as catalyst, being in molar percentage 0.90 (0.96 wt%)

For the production process the chemicals are added sequentially and stirred at room temperature for 2 h. The solution is then deposited on glass substrate(s) by wipe coating. Finally, the coating(s) is ready in 120 s or less at room temperature.

### Example 5

The hydrophobic and transparent coating was produced with the following formulation:
- TEOS as main precursor, being in molar percentage 15.71 (51.90 wt%)
- ethanol as organic solvent, being in molar percentage 50.08 (36.59 wt%)
- OTES secondary precursor, being in molar percentage 0.14 (0.61 wt%)
- distilled water as hydrolysis reagent, being in molar percentage 32.44 (9.27 wt%)
- HNO₃ as catalyst, being in molar percentage 1.63 (0.95 wt%)

For the production process the chemicals are added sequentially and stirred at room temperature for 2 h. The solution is then deposited on steel substrate(s) by bar coating. Finally, the coating(s) is ready in 120 s or less at room temperature.

### Example 6

The hydrophobic and transparent coating was produced with the following formulation:
- TEOS as main precursor, being in molar percentage 2.30 (10.81 wt%)
- ethanol as organic solvent, being in molar percentage 75.59 (73.89 wt%)
- HMDS secondary precursor, being in molar percentage 0.29 (1.03 wt%)
- distilled water as hydrolysis reagent, being in molar percentage 19.62 (7.96 wt%)
- HCl as catalyst, being in molar percentage 2.20 (1.81 wt%)

For the production process the chemicals are added sequentially and stirred at room temperature for 24 h. The solution is then deposited on glass substrate(s) by dip coating. Finally, the coating(s) is ready in 120 s or less at room temperature.

### Example 7

The hydrophobic and transparent coating was produced with the following formulation:
- TEOS as main precursor, being in molar percentage 1.31 (6.02 wt%)
- isopropanol as organic solvent, being in molar percentage 86.10 (86.10 wt%)
- PFO first secondary precursor, being in molar percentage 0.09 (0.96 wt%)
- HMDS second secondary precursor, being in molar percentage 0.08 (0.28 wt%)
- distilled water as hydrolysis reagent, being in molar percentage 11.17 (4.43 wt%)
- HCl as catalyst, being in molar percentage 1.25 (1.01 wt%)

For the production process the chemicals are added sequentially and stirred at room temperature for 2 h. The solution is then deposited on ceramic substrate(s) by spray coating. Finally, the coating(s) is ready in 120 s or less at room temperature.

### Example 8

The hydrophobic and transparent coating was produced with the following formulation:
- TEOS as main precursor, being in molar percentage 0.92 (4.18 wt%)
- ethanol as organic solvent, being in molar percentage 90.28 (91.03 wt%)
- PFO first secondary precursor, being in molar percentage 0.06 (0.67 wt%)
- OTES second secondary precursor, being in molar percentage 0.05 (0.33 wt%)
- distilled water as hydrolysis reagent, being in molar percentage 7.81 (3.08 wt%)
- HCl as catalyst, being in molar percentage 0.88 (0.70 wt%)

For the production process the chemicals are added sequentially and stirred at room temperature for 2 h. The solution is then deposited on ceramic substrate(s) by slot-die coating. Finally, the coating(s) is ready in 120 s or less at room temperature.

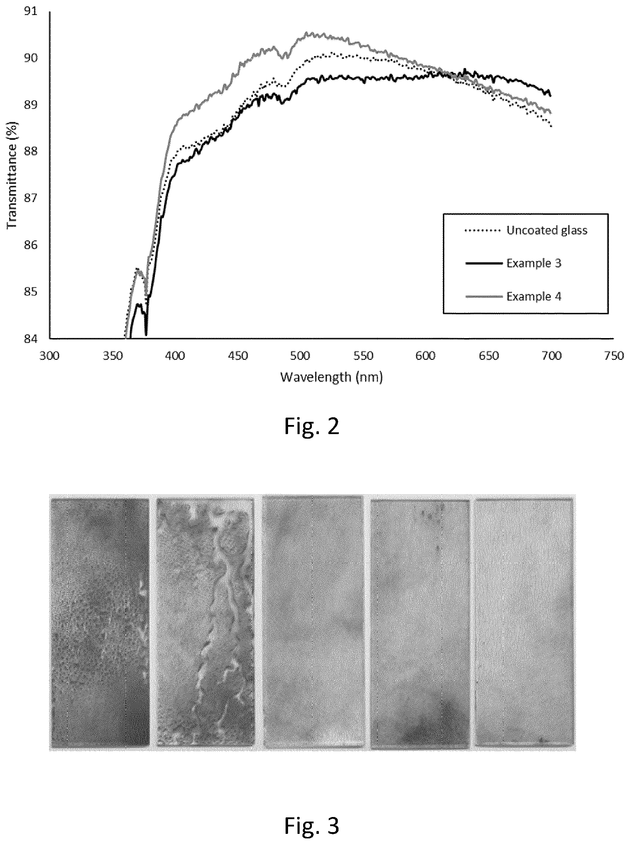

The inventive composition of the present hydrophobic transparent coating from a sol-gel formulation as described above, and as illustrated in the non-limiting Examples 1-8, has the following main advantages:
- thickness of the coating ranging between 5 nm and 5 µm, preferably between 10 nm and 500 nm;
- excellent adhesion between coating and substrates;
- the coating does not affect the transmittance properties of glass substrates (see Figure 2)
- excellent resistance to the action of UV, Vis and IR radiations (absence of yellowing or dulling, after several months of operation)
- excellent resistance to chemical agents and to cleaning products (surfactants, alcohol, etc.)
- excellent resistance to sharp variations in temperature and humidity
- possibility of applying it on the field thanks to its fast-curable time at room temperature (within 120 seconds);
- versatility of the deposition technique: spray, wipe, bar, dip, and slot-die coating;
- compatibility with several substrates: glass, metallic, ceramic;
- stability of the formulation (tested on lab scale after 3 months, stored in air in a closed bottle);
- good durability of the coating (tested on lab scale for more than 1,000 h in UVCON test).

### Bibliography

Bing Guo, W. J. (2018). Efficiency of Electrodynamic Dust Shield at Dust Loading Levels Relevant to Solar Energy Applications. IEEE Journal of Photovoltaics, 8(1), 196-202.
Ferretti, N. (September 2018). PV Module Cleaning Market Overview and Basics. Soiling and Cleaning Research at PI Berlin*.*
José Zorrilla-Casanova, M. P.-G.-d.-C. (2011). Analysis of dust losses in photovoltaic modules. World Renewable Energy Congress, (pp. 2985-2992). Linköping (Sweden).
Julius Tanesab, D. P. (2015). The contribution of dust to performance degradation of PV modules in a temperate climate zone. Solar Energy, 120, 147-157.
Klemens Ilse, et al. (2019). Techno-Economic Assessment of Soiling Losses and Mitigation Strategies for Solar Power Generation. Joule, 3(10), 2303-2321.
Kobrin, B. (2018, May). Self Cleaning Technologies for Solar Panels. Retrieved September 10, 2020, from n-tech research: https://www.ntechresearch.com/blog/self-cleaning-technologies-for-solar-panels/
Kurz, J. (2017). PV Cleaning: Choosing the Optimal Method and Frequency. Retrieved 2020, from http://www.solarpowereurope.org/fileadmin/user_upload/documents/WEBINAR/SolarPower _Europe_Apricum.pdf
Mohammad Reza Maghami, et al. (2016). Power loss due to soiling on solar panel: A review. Renewable and Sustainable Energy Reviews, 59, 1307-1316.
Syed A. M. Said, Husam M. Walvil (2014). Fundamental studies on dust fouling effects on PV module performance. Solar Energy, 107, 328-337.

## Claims

1. A silicon-based hydrophobic and transparent coating on a photovoltaic panel, building glasses, automotive glasses, obtained by the composition of chemicals consisting of
• a silicon-based hydrolysable main precursor selected from tetraalkoxysilanes, being in weight percentage from 0.10 to 65;
• one or more silicon-based hydrolysable secondary precursors, selected from silazanes or organo-trialkoxysilanes having at least eight C-atoms in the non-hydrolysable group, being in in weight percentage from 0.01 to 5.00;
• a hydrolysis reagent, preferably deionized water, being in weight percentage from 0.10 to 15.00;
• an acid catalyst, leading to a solution with a pH lower or equal to 5, being in weight percentage from 0.01 to 5.00;
• an organic solvent, preferably ethanol or isopropanol, balance;
wherein said composition of chemicals is stirred at room temperature for between 2h and 72 h and said coating is cured at room temperature for 120 seconds.

2. The silicon-based hydrophobic and transparent coating as claimed in claim 1 wherein the silicon-based hydrolysable main precursor selected from tetraalkoxysilanes, is tetraethyl-orthosilicate (TEOS).

3. The silicon-based hydrophobic and transparent coating as claimed in claim 1 or in claim 2 wherein the one or more silicon-based hydrolysable secondary precursors are selected from: 1H, 1H, 2H, 2H-perfluorooctyl-triethoxysilane (PFO); octyl-triethoxysilane (OTES); hexamethyl-disilazane (HMDS).

4. The silicon-based hydrophobic and transparent coating as claimed in anyone of the previous claims wherein the acid catalyst is selected from the group consisting of nitric acid (HNO₃) and hydrochloric acid (HCl).

5. The silicon-based hydrophobic and transparent coating as claimed in anyone of the previous claims, wherein:
• the silicon-based hydrolysable main precursor is in weight percentage from 2.00 to 55.00;
• the one or more silicon based hydrolysable secondary precursors are in weight percentage from 0.20 to 3.50;
• the hydrolysis reagent is in weight percentage from 1.50 to 12.00;
• the acid catalyst is in weight percentage from 0.40 to 4.00.

6. A method for obtaining a silicon-based hydrophobic and transparent coating on a substrate as defined in any one of previous claims, said method comprising:
a. obtaining a solution with the composition of chemicals as defined in any one of claims 1 to 5;
b. stirring the solution from step a) for a period comprised from 2 h and 72 h, preferably from 2 h and 48 h;
c. applying at room temperature the liquid formulation from step b) on a substrate;
d. curing to obtain a solid gel coating by leaving the substrate coated with the liquid solution from step c) at room temperature for 120 seconds
wherein the substrate is a photovoltaic panel, building glasses, automotive glasses.

## Patentansprüche

1. Siliziumbasierte, hydrophobe und transparente Beschichtung für Photovoltaikmodule, Gebäudeglas und Autoglas, erhalten durch die chemische Zusammensetzung, bestehend aus:
• einem siliziumbasierten, hydrolysierbaren Hauptvorläufer, ausgewählt aus Tetraalkoxysilanen, wobei der Gewichtsanteil zwischen 0,10 und 65 liegt;
• einem oder mehreren siliziumbasierten, hydrolysierbaren Sekundärvorläufern, ausgewählt aus Silazanen oder Organotrialkoxysilanen mit mindestens acht C-Atomen in der nicht hydrolysierbaren Gruppe, wobei der Gewichtsanteil zwischen 0,01 und 5,00 % liegt;
• einem Hydrolysereagenz, vorzugsweise entionisiertem Wasser, wobei der Gewichtsanteil zwischen 0,10 und 15,00 % liegt;
• einem Säurekatalysator, der zu einer Lösung mit einem pH-Wert von höchstens 5 führt, wobei der Gewichtsanteil zwischen 0,01 und 5,00 liegt;
• einem organischen Lösungsmittel, vorzugsweise Ethanol oder Isopropanol, das den Rest bildet,
wobei diese chemische Zusammensetzung bei Raumtemperatur zwischen 2 h und 72 h gerührt wird und diese Beschichtung bei Raumtemperatur 120 Sekunden lang ausgehärtet wird.

2. Siliziumbasierte, hydrophobe und transparente Beschichtung nach Anspruch 1, wobei der siliziumbasierte, hydrolysierbare Hauptvorläufer, ausgewählt aus Tetraalkoxysilanen, Tetraethylorthosilikat (TEOS) ist.

3. Siliziumbasierte, hydrophobe und transparente Beschichtung nach Anspruch 1 oder Anspruch 2, wobei der eine oder die mehreren siliziumbasierten, hydrolysierbaren Sekundärvorläufer ausgewählt sind aus: 1H, 1H, 2H, 2H-Perfluoroctyl-triethoxysilan (PFO) ; Octyl-triethoxysilan (OTES); Hexamethyldisilazan (HMDS).

4. Siliziumbasierte, hydrophobe und transparente Beschichtung nach einem der vorhergehenden Ansprüche, wobei der Säurekatalysator ausgewählt ist aus der Gruppe bestehend aus Salpetersäure (HNO₃) und Salzsäure (HCl).

5. Siliziumbasierte, hydrophobe und transparente Beschichtung nach einem der vorhergehenden Ansprüche, wobei:
• der siliziumbasierte, hydrolysierbare Hauptvorläufer einen Gewichtsanteil von 2,00 bis 55,00 % aufweist;
• der eine oder die mehreren siliziumbasierten, hydrolysierbaren Sekundärvorläufer einen Gewichtsanteil von 0,20 bis 3,50 % aufweisen;
• das Hydrolysereagenz einen Gewichtsanteil von 1,50 bis 12,00 % aufweist;
• der Säurekatalysators einen Gewichtsanteil von 0,40 bis 4,00 % aufweist.

6. Verfahren zum Erhalten einer siliziumbasierten, hydrophoben und transparenten Beschichtung auf einem Substrat nach einem der vorhergehenden Ansprüche, wobei das Verfahren umfasst:
a. Erhalten einer Lösung mit einer chemischen Zusammensetzung nach einem der Ansprüche 1 bis 5;
b. Rühren der Lösung aus Schritt a) über einen Zeitraum von 2 h bis 72 h, vorzugsweise von 2 h bis 48 h;
c. Auftragen der flüssigen Formulierung aus Schritt b) bei Raumtemperatur auf ein Substrat;
d. Aushärten, um eine feste Gelbeschichtung zu erhalten, indem das mit der flüssigen Lösung aus Schritt c) beschichtete Substrat 120 Sekunden lang bei Raumtemperatur stehen gelassen wird;
wobei das Substrat ein Photovoltaikmodul, Gebäudeglas oder Autoglas ist.

## Revendications

1. Revêtement hydrophobe et transparent à base de silicium sur un panneau photovoltaïque, des vitres de bâtiment, des vitres automobiles, obtenu par la composition de composés chimiques se composant de :
• un précurseur principal hydrolysable à base de silicium choisi parmi les tétraalcoxysilanes, présent en pourcentage en poids de 0,10 à 65 ;
• un ou plusieurs précurseurs secondaires hydrolysables à base de silicium, choisis parmi les silazanes ou les organotrialcoxysilanes possédant au moins huit atomes C dans le groupe non hydrolysable, présent en pourcentage en poids de 0,01 à 5,00 ;
• un réactif d'hydrolyse, de préférence de l'eau désionisée, présent en pourcentage en poids de 0,10 à 15,00 ;
• un catalyseur acide, conduisant à une solution ayant un pH inférieur ou égal à 5, présent en pourcentage en poids de 0,01 à 5,00 ;
• un solvant organique, de préférence de l'éthanol ou de l'isopropanol, en tant que complément ;
dans lequel ladite composition de composés chimiques est agitée à température ambiante pendant entre 2 h et 72 h et ledit revêtement est durci à température ambiante pendant 120 secondes.

2. Revêtement hydrophobe et transparent à base de silicium selon la revendication 1, dans lequel le précurseur principal hydrolysable à base de silicium choisi parmi les tétraalcoxysilanes, est l'orthosilicate de tétraéthyle (TEOS).

3. Revêtement hydrophobe et transparent à base de silicium selon la revendication 1 ou selon la revendication 2, dans lequel le ou les précurseurs secondaires hydrolysables à base de silicium sont choisis parmi : le 1H,1H,2H,2H-perfluorooctyltriéthoxysilane (PFO) ; l'octyltriéthoxysilane (OTES) ; l'hexaméthyldisilazane (HMDS).

4. Revêtement hydrophobe et transparent à base de silicium selon l'une quelconque des revendications précédentes, dans lequel le catalyseur acide est choisi dans le groupe constitué par l'acide nitrique (HNO₃) et l'acide chlorhydrique (HCl).

5. Revêtement hydrophobe et transparent à base de silicium selon l'une quelconque des revendications précédentes, dans lequel :
• le précurseur principal hydrolysable à base de silicium est présent en pourcentage en poids de 2,00 à 55,00 ;
• le ou les précurseurs secondaires hydrolysables à base de silicium sont présents en pourcentage en poids de 0,20 à 3,50 ;
• le réactif d'hydrolyse est présent en pourcentage en poids de 1,50 à 12,00 ;
• le catalyseur acide est présent en pourcentage en poids de 0,40 à 4,00.

6. Procédé permettant d'obtenir un revêtement hydrophobe et transparent à base de silicium sur un substrat tel que défini selon l'une quelconque des revendications précédentes, ledit procédé comprenant :
a. l'obtention d'une solution avec la composition de composés chimiques telle que définie selon l'une quelconque des revendications 1 à 5 ;
b**.** l'agitation de la solution de l'étape a) pendant une période comprise entre 2 h et 72 h, de préférence entre 2 h et 48 h ;
c. l'application à température ambiante de la formulation liquide de l'étape b) sur un substrat ;
d. le durcissement pour obtenir un revêtement de gel solide en laissant le substrat durci avec la solution liquide de l'étape c) à température ambiante pendant 120 secondes
dans lequel le substrat est un panneau photovoltaïque, des vitres de bâtiment, des vitres automobiles.
